(19) Europäisches Patentamt / European Patent Office / Office européen des brevets

(11) **EP 2 897 400 A1**

(12) **EUROPEAN PATENT APPLICATION**

(43) Date of publication:
**22.07.2015 Bulletin 2015/30**

(51) Int Cl.:
**H04W 24/00** *(2009.01)* **H04W 28/02** *(2009.01)*
**H04W 88/02** *(2009.01)*

(21) Application number: **14382014.0**

(22) Date of filing: **20.01.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Vodafone IP Licensing Limited**
**The Connection**
**Newbury**
**Berkshire RG14 2FN (GB)**

(72) Inventors:
• **De Pasquale, Andrea**
**E-28150 Madrid (ES)**

• **Le Pezennec, Yannick**
**E-28150 Madrid (ES)**
• **Garcia Viñas, Aitor**
**E-28150 Madrid (ES)**
• **Dominguez Romero, Francisco Javier**
**E-28150 Madrid (ES)**
• **Tenorio Sanz, Santiago**
**E-28150 Madrid (ES)**

(74) Representative: **Boult Wade Tennant**
**Verulam Gardens**
**70 Gray's Inn Road**
**London WC1X 8BT (GB)**

(54) **Congestion detection**

(57)   There is provided a method for detecting, in a telecommunication network (TN), a congestion condition in at least one cell of the telecommunication network (TN), the method comprising:
- measuring (41, 52, 61, 72) at least one parameter related to a radiocommunication between a user device (UD) and the telecommunication network (TN); and
- determining (42, 53, 62, 73), based on the at least one measured parameter, whether the network is congested or overloaded.

FIG. 3

## Description

## TECHNICAL FIELD OF THE INVENTION

The present invention relates to a solution for detecting congestion in a telecommunication network.

## BACKGROUND OF THE INVENTION

During events when hundreds or thousands of people using user devices, such as smartphones, gather (such events may include concerts, sport events, etc.), the massive concentration of these user devices presents challenges in terms of the provision of circuit-switched and packet-switched services with a suitable quality for the end users. In fact, such a concentration creates a huge amount of requested packet-switched connection in a telecommunication network. Each device or user device requires control signalling to maintain its data connection, even when no data is sent. This in turn creates congestion/overload in the telecommunication network and reduces the throughput and the resources available for the user data transmission. The overload in control channels and signalling traffic represents a problem and it is necessary to detect it as soon as possible with the objective to avoid the overload situation in the telecommunication network.

In the present application the terms congestion and overload will be used indistinctly for referring to a situation wherein a telecommunication network collapses (or is near to collapse) and therefore the resources for handling requests either from the user devices or from the telecommunications network - especially in the uplink - become (or may become) insufficient.

In particular, if the congestion/overload results in total collapse of the telecommunication network, then the telecommunication network cannot receive/send data from/to many user devices.

Today, one available solution for solving such a problem is to send a Radio Resource Control RRC Connection Reject at the beginning of the call. The Connection Reject has two possible useful Information Elements in this situation:

- RRC Connection Reject with waiting timer at maximum of 15 seconds. In this case, the user device will re-try the connection after 15 seconds. This solution provides a delay of transmission but when there are many user devices the problem continues and congestion continues.
- RRC Connection Reject with a redirection to 2G. In this case, the user device will switch to 2G, but due to the reselection parameters it will come back to 3G producing more signalling again. Therefore this is not a suitable solution, and consequently there is no way to indicate there is an extreme overload in the telecommunication network.

Some of the existing solutions are to detect the high traffic load from the telecommunications network.

EP 1510082B1 relates to an invention that includes a method and system for monitoring and controlling congestion in the uplink based on user device measurements or Radio Access Network (RAN) measurements for code division multiple access (CDMA) systems having multi-user detection capabilities.

US20130194919A1 relates to a method, an apparatus, and a computer program product for wireless communication which are provided in connection with improving QoE (Quality of Experience) in RAN congestion. In this case the user device is limited to the measures of certain parameters but the network is responsible for decisions.

- In one example, a communications device is equipped to indicate a quality control indicator (QCI) for each of a plurality of applications that communicate with a RAN over a bearer, receive information regarding modification of the bearer or additional bearers based on the QCIs, and modify the bearer or additional bearers according to the information to achieve a desired QoE for at least one of the plurality of applications.
- In another example, a RAN is equipped to receive a QCI for each of a plurality of applications related to a bearer from a user device, and modify the bearer or adding additional bearers for communicating with the user device based on the QCI for each of the plurality of applications to improve QoE at the user device.

EP 1510082B1 and US20130194919A1 are focused on the network side, the detection of congestion is performed on a telecommunications network, and acknowledgement of the congestion is not performed in the user device, therefore communication to the user about the congestion in the Uplink just contributes to further overloading the telecommunication network.

In US20100309788A1 there are shown systems, methods, and apparatuses which are disclosed to facilitate wireless communications. A user device, such as a mobile device, identifies data congestion and transmits a recommended data rate modification wireless signal (e.g., a recommended reduced data rate) to the base station that is transmitting data to the user device. The base station may reduce the data rate of the down link to the reduced data rate. This document is focused on detecting the data rate in the downlink of the user device, but do not solve the problem of detecting congestion towards the uplink.

One problem with the state of the art is that further overload is created since the telecommunication network needs to communicate to the user device a command for changing operating parameters.

In addition, after the congestion is identified, there are further problems relative to how to manage the uplink. Current solutions aim at sending a communication first to the user device but at times signalling in these processes is so huge that that the telecommunication network

- cannot process all the requests and
- cannot stop the user devices to make more requests.

As a consequence, the demand of traffic data from the user device applications cannot be satisfied in a situation of overload congestion in the telecommunication network, and it is necessary that the telecommunication network controls the situation by sending additional signalling - and therefore further incrementing the signalling traffic.

In addition, battery life is also reduced when transmission attempts are unsuccessful due to telecommunication network congestion, since the user device uses continuously the communication channels during a long period of time.

## STATEMENT OF THE INVENTION

The present invention provides a solution for the aforementioned problem by a method for detecting a congestion condition in at least one cell of the telecommunication network according to claim 1, an application according to claim 12, a user device according to claim 14 and a server according to claim 15. The dependent claims define preferred embodiments of the invention. All the features described in this specification (including the claims, description and drawings) and/or all the steps of the described method can be combined in any combination, with the exception of combinations of such mutually exclusive features and/or steps.

In particular, in a first aspect of the invention there is provided a method for detecting, in a telecommunication network, a congestion condition in at least one cell of the telecommunication network, the method comprising:

- measuring at least one parameter related to a radio-communication between a user device and the telecommunication network; and
- determining, based on the at least one measured parameter, whether the network is congested or overloaded.

In this first aspect of the invention, determining whether the telecommunication network is congested or overloaded, may comprise that an entity such as user device or a server in the telecommunication network compares the parameters with a value stored in said entity, and said entity establishes or identifies whether there is congestion in the telecommunication network when some criteria preloaded in said entity are fulfilled.

Advantageously, this aspect may comprise either autonomous operation by a user device or operation by a server located in a telecommunication network; therefore said possible server detects the congestion automatically without any intervention and notice of the user device or other element in the network. Additionally this aspect reduces the number of the connections to the telecommunication network during its execution, resulting in a reduction of the congestion in the telecommunication network.

### Application of determined criteria on the measured parameter

In an embodiment of the invention, the step of determining whether the telecommunication network is congested or overloaded may comprise applying determined criteria on the measured parameter.

In this embodiment, an entity, such as a user device or a server in the telecommunication network, may compare the measured parameters against their respective thresholds and applies their respective criteria for the determination of congestion.

Advantageously this embodiment reduces the number of false positive detections increasing the efficiency of the method, because different criteria must be fulfilled to determine the congestion.

### Autonomous Determination performed by the user device

In an embodiment of the invention, the determination is performed by the user device.

Advantageously, in this embodiment the telecommunication network or servers in the telecommunication network are not responsible for the determination, and the user device is the one in charge of this action. In other words, the user device determines the congestion autonomously. Therefore, the complete determination is performed by the user device, even if there is a problem in the telecommunication network or in the servers of the telecommunication network.

### Autonomous measuring by the user device

In an embodiment of the method, the measured parameters are measured by the user device.

Advantageously, in this embodiment the telecommunication network or servers in the telecommunication network are not responsible for the measurements, and the user device is the one in charge of this action. In other words, the user device measures the parameters autonomously. Therefore, the complete measurement is performed by the user device, and advantageously the network is not needed in the measurements, thus discharging the telecommunications network of using resources. In this case, the user device may also determine congestion autonomously based on these measured parameters. These parameters may be parameters that are available to be measured by the user device without a need for the network or servers in the network to indicate these parameters. Alternatively, these parameters may be derived by the user device based on one or more indications received from the network or servers in the network.

*Autonomous measuring by the user device: Selection of the parameters which are to be measured*

In an embodiment, the at least one measured parameter is selected from at least one of the following groups:

- First group: distinguishing between Layers,

    a) Available in the application layer. This case has the advantage that can be realized without changing the chipsets in the user device.
    b) Available in the 3G or Long Term Evolution (LTE) protocols. In this case the chipset need new parameters.

- Second group: Related to the throughput in downlink and uplink,

    a) Waiting time.
    b) Throughput in downlink and in uplink.
    c) Serving Grant in the uplink.
    d) Coverage indicator in the user device.

- Third group: Detection of a high number of people a surrounding area,

    a) Checking the number of Bluetooth connexions in the surroundings.
    b) Checking the audio pattern in the surroundings.
    c) Checking with the rear camera the number of people in the surroundings.

- Fourth group: Parameters in the radio interface,

    a) Noise to signal ratio.
    b) Power headroom UPH.
    c) DPSCH and unhappy bit.
    d) Uplink frequency noise within the user device.
    e) Channel quality indicator.
    f) PUCCH channel

- Fifth group: Particular features activated,

    a) Access class barring.
    b) high period of time of deactivation detection, preferably 2 ms deactivation.

Advantageously this embodiment provides a complete knowledge of the telecommunication network situation using a combination of more than one group, because a congestion situation in the telecommunication network can be detected even if there is a failure of the system corresponding to one of the groups of selection previously mentioned. For example, if there is a failure in the group of selection Particular features activated, the method can detect the congestion situation according to the measures of the other groups, for example measures of parameters in the radio interface. Advantageously false positives can be avoided by checking congestion in more than one group.

In an embodiment of the invention, applying determined criteria comprises comparing the at least one measured parameter against a respective threshold and deciding whether the telecommunication network is congested if determined measure exceeds the threshold, or if determined measure does not reach the threshold.

In an embodiment the at least one measured parameter comprises one of:

- an uplink interference; or
- a waiting time for sending a volume of data on uplink; or
- an unhappy bit Ratio on High-Speed Uplink Packet Access (HSUPA); and/or
- a throughput in downlink.

Advantageously in this embodiment the user device detects the congestion autonomously using parameters which are accessible to it, without any intervention and notice of the user and other entity, such a server in the telecommunications network. This embodiment reduces the number of the connections to the telecommunication network during its execution, resulting in a reduction of the congestion in the telecommunication network.

If the user device identifies congestion autonomously there is no need to command a change of transmission parameters from the telecommunication network.

Surprisingly there exists also an increment in the duration of the user device's battery, because the number of connections from the user device to the telecommunication network is reduced.

*Measuring by the telecommunication network*

In an embodiment the measuring is performed by the telecommunication network.

More specifically, an entity belonging to the telecommunication network, external to the set of user devices in a cell, is in charge of the measurements. This provides one or more of the following advantages:

- independency from the capabilities of each user device,
- independency from the operating system of each device,
- global vision or panoramic vision of the congestion situation.

*Measuring by the telecommunication network: Selection of the parameters which are to be measured*

In an embodiment of the invention the measuring is performed by the telecommunication network the at least one parameter is selected from at least one of the following groups:

- parameters related to a particular date or hour in a calendar,
- parameters related to a particular set of KPI (key parameter indication), preferably RRC (RESOURCE RADIO CONTROL) success rate within a time interval or uplink (UL) load within a time interval, or more preferably telecommunication network counters such as the average BH (busy hour) KPI.

Further, in an embodiment of the invention wherein the measuring is performed by the telecommunication network, the telecommunication network may send a message updating about a network condition to at least one user device, preferably through a 3G or 4G telecommunication standards. The condition can be one of congested or not congested. The telecommunication network subsequently compares the parameters with a value stored in a server or an entity in the telecommunications network, and said entity determines whether there is congestion in the telecommunication network when some criteria preloaded in said entity are fulfilled. After the telecommunication network detects the congestion, it sends a message or a communication signal to the user device to identify the new telecommunication network condition.

Surprisingly, this embodiment has the advantage that the telecommunication network may detect the congestion automatically without any intervention and notice of the user and other entity, and notifies automatically the situation to the user device. Additionally as the method is performed in the telecommunication network, the user device saves battery because the only task assigned to the user device is receiving notification of congestion from the telecommunication network.

In an embodiment of the invention the method further comprises:

- identifying, by the user device, a congestion condition in at least one cell on the telecommunication network;
- determining, by the user device , at least one appropriate action to be taken by the user device in order to minimize said congestion condition in the at least one cell; and
- performing, by the user device , the determined at least one appropriate action.

In a second aspect of the invention there is provided an application for detecting, in a telecommunication network, a congestion condition in at least one cell of the telecommunication network, the application comprising:

- means for measuring at least one parameter related to a radio communication between a user device and the telecommunication network, and
- means for determining, based on the at least one measured parameter, whether the network is congested or overloaded.

Advantageously this application comprises the means to make the user device perform the method and allows implementing this method in a user device that can be connected to a telecommunication network without any perception and intervention of the final user, such as a user of a user device, preferably a mobile phone.

In an embodiment of the second aspect of the invention the application further comprises means for performing at the user device the relevant steps of any one of the particular embodiments of the method of the first aspect of the invention.

In a third aspect of the invention there is provided a user device adapted to perform the relevant steps of any one of the particular embodiments of the method of the first aspect of the invention.

Advantageously a user device according to the invention can perform the method, thus automatically detecting a congestion situation in the telecommunication network without increasing the load in the telecommunication network. Additionally the device can implement other methods to reduce the traffic load in the uplink in the telecommunication network.

In a fourth aspect of the invention there is provided a server adapted to perform the relevant steps of any one of the particular embodiments of the method of the first aspect of the invention.

Advantageously a server on a telecommunication network according to the invention can perform the method, thus automatically detecting a congestion situation in the telecommunication network without increasing the load in the telecommunication network. Additionally the device can implement other methods to reduce the traffic load in the uplink in the telecommunication network.

*Coordinated local queuing control and hierarchical time scheduling*

In a further aspect of the invention there is provided a method for coordinated local queuing control. The method may comprise performing a local scheduling (e.g., scheduling at the user device) based on one or more telecommunication network conditions established by the telecommunication network (or an entity associated with the network). These one or more conditions may force one or more user devices to queue transmissions even when they could actually transmit if there was no telecommunication network coordination. These one or more conditions may be received by the user device. The user device may interpret them and perform a local scheduling accordingly. In this way the congestion is further controlled in uplink.

In a further aspect, a method of scheduling transmission of data by a first user device to a telecommunications network is described. The method comprises determining a transmission time for the first user device based on a hierarchical assignment of transmission times based on different levels of time scheduling (i.e., a hierarchy). For example, the hierarchical assignment of transmission times may be done, at a first level, based on a hierarchy between groups. A group may include one or more user devices and/or one or more cells of the network. So, for example, the first level assignment may be based on terminals and/or cells identifiers (cell IDs). Each group may have a priority value, and the assignment may be based on the priority value of each group (e.g., in order of priority). For example, the group with higher priority may be given a higher priority scheduling (e.g., a longer transmission period, a more frequent transmission period, etc.) than a group with lower priority. Further, the hierarchical assignment of transmission times may be done, at a second level, based on a hierarchy within groups. So, for example, the second level assignment may be based on priorities associated with the applications. So, for example, transmissions from a high priority application (e.g., real-time / near real-time application) may be given a higher priority scheduling (e.g., a longer transmission period, a more frequent transmission period, etc.) than an application with lower priority. Importantly, the scheduling at the two levels is done independently from each other- i.e., it ignores the priorities in the other level. In other words, the first level assignment is not influenced by the second level assignment, and vice versa. Importantly, the two levels of assignment, when combined, result in a common hierarchical assignment. By way of example, assume there are three groups (e.g., groups of devices associated with a respective cell - Group 1, Group 2 and Group 3) each using three applications (App1, App2 and App3). Assume all groups have the same group priority, whilst App1 has high app priority, App2 has medium app priority, and App3 has low app priority. So, at the first level, each group is assigned a same period of transmission, but within each group App1 will have a more frequent transmission period than App2 and App3, and App2 will have a more frequent transmission period that App3. Now, assume that Group 1 has high group priority, Group2 has medium group priority and Group 3 has low group priority. In this case, Group 1 may be having a longer period of transmission than Group 2 and Group 3, and Group 2 may have a longer period of transmission that Group 3. However, within each group the frequency of transmission for the applications will be as in the other case, i.e., App1 will have a more frequent transmission period than App2 and App3, and App2 will have a more frequent transmission period that App3. Thus, the overall assignment of transmission times may be changed by changing each priority level independently, for example the group priorities can be changed without changing the application priorities, and vice versa. This allows more flexibility in the assignment of transmission. Each level of assignment may be determined by the same entity (e.g., by a network entity or the user devices) or by different entities (e.g., the first level by a network entity, the second level by the user devices, and vice versa).

Further aspects are also provided as additional aspects and/or in combination with any of the above described aspects, which are described herein below.

In a first additional aspect, there is provided a method for congestion management by a user device in a telecommunication network, the method comprising:

- identifying, by the user device, a congestion condition in at least one cell on the telecommunication network;
- determining, by the user device, at least one appropriate action to be taken by the user device in order to minimise said congestion condition in the at least one cell; and
- performing, by the user device, the determined at least one appropriate action.

In this method these further steps are implemented to manage the traffic load in a congestion situation in the telecommunication network.

Advantageously this method of congestion management reduces the traffic signalling and reduces the traffic congestion because, as a difference with the state of the art, the telecommunication network is not implicated in the task of managing the connections of a large number of user devices trying to send data through the uplink in the telecommunication network. Therefore the method allows the telecommunication network to be used for different tasks when there is a congestion situation, such as a situation of large concentration of user device in one particular location. The control channels and signalling traffic are the main reason of overload in most of the cases, with special reference to the uplink, and such traffic is reduced and controlled by a method according to the invention. In congestion or overload situation the user experience is poor and this method allows improving user performance for all users in a cell and therefore allows higher achieved uplink cell capacity.

In an embodiment the at least one appropriate action may comprise scheduling of transmission of data, wherein data means one of raw data, a set of data, burst of data or a sequence of data, to be sent by the user device to the telecommunication network according to a scheduling rule, the rule configured to minimise said congestion condition.

Advantageously by defining a rule for scheduling allows establishing moments for transmission in user device, therefore allowing distribution of the load in user device and in a group of user devices in a cell.

Surprisingly this method reduces the consumption of energy in user devices, since said method reduces the number of connections and requests that user device performs towards the telecommunication network because there is no need of communication from the telecommunication network.

*Autonomous Identification at User Device*

In an embodiment, the congestion condition is identified autonomously by the user device. The identification, by the user device, of a congestion condition can be performed in several ways such as identifying or discovering the congestion autonomously through different measurements of different parameters.

*Identification at Telecommunication Network End*

In another embodiment, the user device identifies congestion due to a telecommunication network identification or signal parameter which is sent to the user device from the telecommunications network. In this embodiment the user device identifies or discovers the congestion situation based on a congestion signal received from the telecommunication network.

Advantageously, the identification or detection action is performed by the telecommunication network and thus it is independent of user device's capabilities or operating system. In this invention, if the telecommunication network detects the congestion, a message communication the network condition is sent to a user device.

*Autonomous Identification at User Device by measuring parameters*

In an embodiment the user device identifies autonomously the congestion situation autonomously by:

- measuring at least one parameter related to the radio-communication between the user device and the telecommunication network; and
- determining, based on the at least one measured parameter, whether the telecommunication network is congested or overloaded.

Advantageously, such ways of identification are available to the user device since the parameters which are measured and evaluated are known by the user device.

Additionally this embodiment reduces the number of the connections from the user device to the telecommunication network during its execution for identifying congestion, resulting in a reduction of the congestion in the telecommunication network and reduction of battery consumption.

*Scheduling of transmission based on different type of applications*

In an embodiment the scheduling of transmission is based on a type of application associated with the data to be transmitted. For example, the application associated is of the type of real time applications, semi-real time applications or best effort applications. Advantageously this allows prioritising differently for sensitive than other type of data.

*Scheduling of transmission is based on an identifier of the user device*

In an embodiment the scheduling of transmission is based on an identifier of the user device, preferably the International Mobile Station Equipment Identity (IMEI) number. This allows having a distribution which tends to be uniform within a cell and randomly distributed.

In an embodiment the scheduling of transmission is based on both:

- the type of application associated with the data to be transmitted, and
- an identifier of the user device, preferably the International Mobile Station Equipment Identity (IMEI) number.

This embodiment presents the following advantages:

- different treatment for sensitive and other type of data, and
- having at the same time a distribution which tends to be uniform within a cell and randomly distributed.

*Application of scheduling of transmission: Assignment of an initial time for transmission:*

In an embodiment the scheduling of transmission is performed by assigning an initial time ($T_{initial}$) and a period time (T) for transmission.

Advantageously this allows sharing the time for transmission among:

- applications in a single user device (Hierarchical distribution) and/or,
- user devices in a cell or group of cells (Cell interleaving),

*User devices in a cell or group of cells (Cell interleaving)*

In an embodiment the user device is associated with a first cell of a plurality of cells in the telecommunications network, and the scheduling of transmission is performed by assigning, based on the first cell, a transmission time for the user device. Besides, a period time for transmission can be also assigned. This allows scheduling of transmission of a group of user devices within a cell or in a group of cells.

In other words, the scheduling of transmission is performed by

- differentiating separate cells within an area,
- the transmission time assigned to a user device is the same transmission time that would be assigned to any other user device within the same cell.

*Different initial time for transmission in different cells*

In an embodiment the assigned transmission time is different from a transmission time assigned to user devices which are not associated with the first cell of the plurality of cells.

Advantageously this scheduling allows identifying a group of cells, so that simultaneous transmission from user devices in cells which are consecutive in a closed area or street or avenue is avoided.

*Application of scheduling of transmission 2: Assignment of an initial time for transmission in a user device for different applications, (Hierarchical assignment of initial time)*

In an embodiment the scheduling of transmission is performed by assigning an initial time and a period time for transmission for different applications from a single user device. This allows assigning a different initial time and a different time for transmission to real time applications, semi-real time applications or best effort applications. Advantageously this allows different hierarchy for sensitive than other type of data within a unique user device.

In an additional aspect of the invention there is provided an application for congestion management by a user device in a telecommunication network, the application configured to run at a user device associated with the telecommunication network, the application comprising:

- means for performing at the user device the steps of the method of the first aspect of the invention when they are referred to a user device,
- means for identifying, by the user device, a congestion condition in at least one cell on the telecommunication network;
- means for determining, by the user device, at least one appropriate action to be taken by the user device in order to minimise said congestion condition in the at least one cell; and
- means for performing, by the user device, the determined at least one appropriate action.

Advantageously this application comprises the means to make the user device perform the method and allows implementing this method in a device that can be connected to a telecommunication network without any perception and intervention of the final user, allowing a user device to use the telecommunication network efficiently in a congestion situation, such as a situation of large concentration of users devices in one determinate place.

Surprisingly this application reduces the consumption of energy in user device, since it reduces the number of connections from the user device to the telecommunication network.

An application according to the invention is advantageous with respect to the state of the art since it allows:

- performing a congestion detection, queuing all uplink data packets and reducing the uplink interference by randomizing the interference or making a coordinated intelligent scheduling;
- not changing the content to be transmitted by a user device, but rather controlling the delivery time; as a consequence, a temporal storing area is created in the user device itself and not after the telecommunication network;
- reducing the uplink load in geographical areas of congestion by sending data packets in that same area of congestion;
- spreading data traffic in time, and also controlling the simultaneous transmission of different user devices, ensuring they are not transmitting at the same time using either randomization, or intelligent uplink scheduling considering different cells;
- applying the to any kind of traffic, including Instant Messaging;
- configuring the rest of applications running on a user device to be aware that their connection may be intermittent and thus, for example, avoiding retransmissions in case of TCP (Transmission Control Protocol) applications waiting to receive a confirmation of receipt;
- reducing, on average, the delayed uplink transmission of the acknowledgements for packets that were received by the user device by introducing artificial but controlled delays that will in turn improve the overall uplink congestion. The end user's experience is improved for the majority of the applications, including instant messaging, in respect to the case of having the uplink congested due to uncontrolled uplink transmission attempts.

In a second additional aspect of the invention there is provided a user device adapted to perform the steps of any one of the methods in the embodiments of the first aspect of the invention.

In a third additional aspect of the invention there is provided a server comprised on a telecommunication network, the server being adapted to perform the steps of any one of the methods in the embodiments of the first aspect of the invention when they are referred to the telecommunication network or to a server on a telecommunication network.

In a fourth additional aspect of the invention there is provided an application for congestion management by a user device in a telecommunication network, the application configured to run at a user device associated with the telecommunication network, the application comprising:

- means for identifying, by the user device, a congestion condition in at least one cell on the telecommunication network;
- means for determining, by the user device, at least one appropriate action to be taken by the user device in order to minimise said congestion condition in the at least one cell; and
- means for performing, by the user device, the determined at least one appropriate action.

Advantageously this application makes the server perform the method and allows implementing this method on a server allocated in a mobile network without any perception and intervention of the final user, allowing a user device to use the telecommunication network efficiently in a situation of large concentration of user device in one determinate place.

**DESCRIPTION OF THE DRAWINGS**

These and other characteristics and advantages of the invention will become clearly understood in view of the detailed description of the invention which becomes apparent from preferred embodiments of the invention, given just as an example and not being limited thereto, with reference to the drawings.

Figure 1    This figure represents a system in a situation of congestion or overload of the telecommunication network (TN). Due to the huge concentration of user devices (UDs) trying to connect to the telecommunication network (TN) through the Base Transceiver Station (BTS), the uplink (UL) is saturated and the network (TN) cannot process this amount of requests.

Figure 2    This figure shows an example of the queuing process in the user devices (UDs) located in the same cellular area telecommunication network (TN) attempting to send data (D), wherein different times for transmission (T1, T2) are represented.

Figure 3    This figure shows an example of scheduling providing cell interleaving focused on sport events located in a stadium. The stadium is divided into four groups of cells, the cells being named as group A and group B.

Figure 4    This figure shows an embodiment of a method for detecting congestion according to the invention autonomously by the user device (UD).

Figure 5    This figure shows an embodiment of a method for detecting congestion according to the invention by the telecommunications network (TN).

Figure 6    This figure shows a situation wherein detection of congestion (61, 62, 63, 64, and 65) is performed by the user device (UD) and management of congestion (66, 67, and 68) is performed subsequently by the user device (UD).

Figure 7    This figure shows a situation wherein detection of congestion (72, 73, 74, 75 and 76) is performed by the telecommunications network (TN) and management of congestion (77, 78 and 79) is performed subsequently by the user device (UD).

Figure 8    This figure shows an embodiment of a method for congestion management by a user device in a telecommunication network.

**DETAILED DESCRIPTION OF THE INVENTION**

Once the object of the invention has been outlined, specific non-limitative embodiments are described hereinafter. The terms cellular access mobile telecommunication network and telecommunication network (TN) are used interchangeably herein and may refer to the area or zone wherein a BTS (Base Transceiver Station) can supply coverage to user device of said area.

A method according to the invention is performed on a system comprising a cellular access mobile telecommunications network (TN), in which a data server can be allocated, a plurality of user device (UD), and radio-communication links between the telecommunications network (TN) and the user device (UD), where the data (D) are sent from the user device (UD) to the telecommunications network (TN) in the uplink (UL), and in the downlink (DL) the data are sent from the telecommunications network (TN) to the user device (UD).

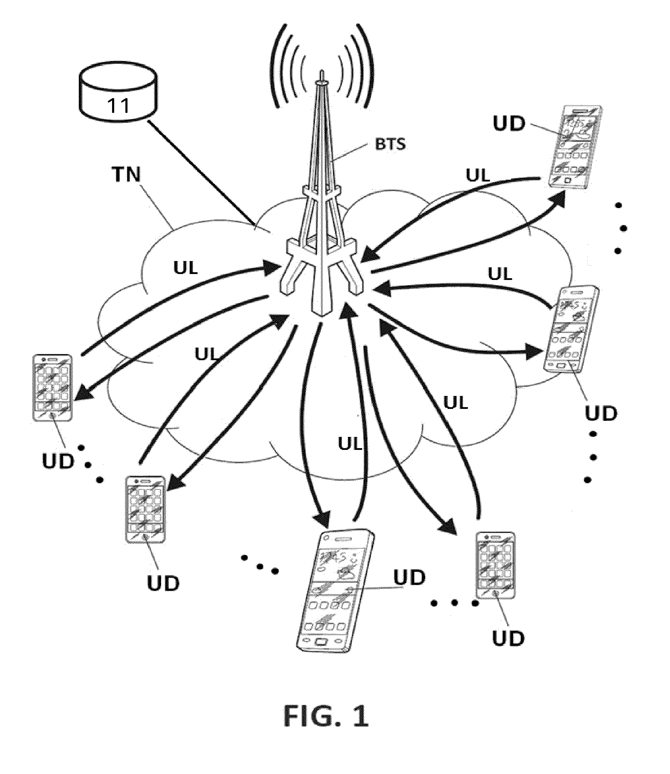

An overload situation in the telecommunication network (TN) is shown in figure 1, where a large number of user devices (UD) are represented attempting to access the resources of the telecommunications network (TN). As a consequence, the uplink (UL) connection collapses. In Figure 1 there is represented a server (11) comprised in the telecommunications network (TN).

*EXEMPLARY CONGESTION DETECTION/IDENTIFICATION PROCESSES*

*Autonomous Detection performed by the user device and Autonomous measuring by the user device (UD)*

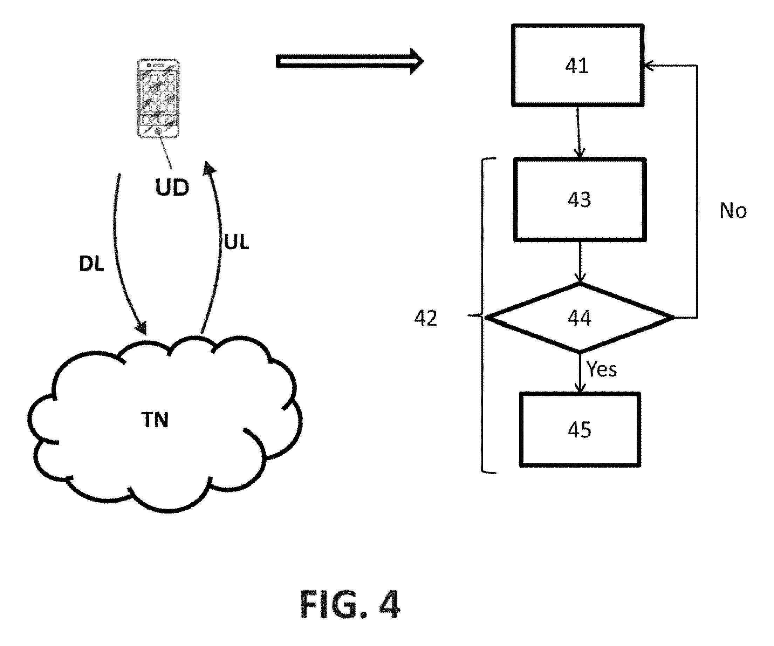

An embodiment of the invention is shown in figure 4. In this example the detection of congestion is carried out by a user device (UD), according to the following steps:

In the first place, the user device (UD) measures (41) the throughput in the uplink (UL) in an application of instant messaging. For example, the measure may be 100 Kbps.

Further, a congestion situation is determined (42) by:

- comparing (43) the throughput measured with a threshold loaded in the user device (UD). For example, the threshold may be 120 Kbps;
- determining (44) whether a criterion is fulfilled. In the present example, the criterion is: if the measured value is lower than the threshold, then there is no congestion. Since the measured throughput is 100Kbps and the threshold is 120Kbps, there is no congestion.

If no congestion is determined and/or identified, the next step is repeating the first step (41).

In the case that there is congestion, the user device (UD) acknowledges (45) -or finally ends the determination (42)- the congestion and it is ready to initiate countermeasures to adapt itself to this situation.

*Detection in the telecommunication network (TN)*

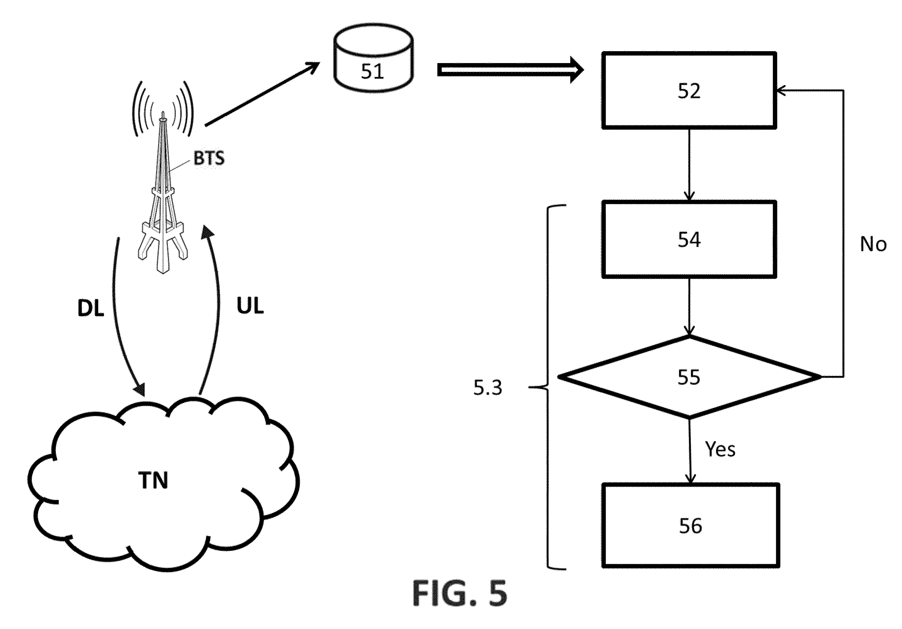

Another embodiment of the detection of congestion is shown in figure 5. In this example the detection is carried out by a server (51) or an entity located in the telecommunication network (TN), according to the following steps:

First, an uplink (UL) load in the telecommunications network (TN) is measured (52). For example, the UL load may be 500 Mbps.

Second, a congestion situation is determined (53) by

- comparing (54), by the telecommunication network (TN), the UL load with a threshold loaded in the server (51) - for example the threshold may be 120 Kbps;
- determining (55) if there is congestion or not by checking whether a criterion is fulfilled. In the present example, the criterion is: if the UL load is greater than the threshold, then there is congestion. Since the measured UL load is 500 Mbps and the threshold is 120Kbps, there is congestion in the telecommunication network (TN). In this case, the server (51) ends (56) or acknowledges, or finally detects (56) the congestion. In a particular example the final detection (56) of congestion comprises communicating to a user device (UD) the condition through a 3G or a 4G telecommunication standard; therefore this last step is the server (51) sends (56) a message updating about a telecommunication network (TN) condition to at least one user device (UD), preferably through a 3G or 4G telecommunication standard.

In the case that there is no congestion, the server (51) repeats the first step (52).

Apart from the examples shown in the figures, the following embodiments can be also implemented according to the present invention.

In another embodiment of the invention, determination as to whether the telecommunication network (TN) is congested or overloaded is performed by comparing the at least one measured parameter against one or more respective thresholds and applying respective criteria for the determination of congestion.

*Autonomous measuring by the User Device (UD): Selection of the parameters which are to be Measured and compared for determination*

In this example, also shown in figure 4, measuring (41) of the parameters is performed by a user device (UD).

The measurements performed by a user device (UD) are taken from the radio-communication environment between the user device (UD), the telecommunication network (TN) and/or other user device. This radio-communication environment include all the communications shown under the telecommunications standard 802.11 (WLAN), 802.15 (WPAN) and through a 3G or a 4G telecommunication standard, preferably is triggered from the application layer in said protocols. The measures are preferably related to detection of events or values of parameters:

Some of the examples in the group of events are:

- detection of human voice audio patterns around, this parameter assessing the presence of a large concentration of people,

- detection of people with rear camera, preferable during a call without headset, the user device can activate the rear camera to detect the number of people around,

- detection of access class barring in the cell to which the user device (UD) belongs.

If some of the events mentioned above are detected then congestion is determined or detected.

Some of the examples within the group of parameters are:

- Data throughput either in uplink (UL) or the downlink (DL) transmission, preferable the throughput of specific applications that usually carry higher throughput or usually carry higher throughput in an area with "similar" network capabilities area. The identification of this area can be done using GPS coordinates, Cell Identifier, High-Speed Packet Access HSPA or HSPA+ indicators, coverage quality. In an embodiment the data throughput is obtained by creating speed tests periodically of short duration to check the achievable throughput. Typical ranges of uplink throughput (UL) are [64-200 Kbps] and typical ranges of downlink throughput (DL) are [300Kbps-1 Mbps].

- High waiting time for data in the uplink (UL) transmission, preferable the waiting time of high packets in user devices (UDs) to be able to send. Typical range of high waiting time is [300ms-5 seconds].

- High latency in uplink (UL) transmission data. Typical high latency in uplink (UL) is [100ms-300 ms].

- High Received Signal Strength Indicator (RSSI), normally means that the uplink (UL) is congested. This measurement is provided by the telecommunication network (TN) in a System Information SIB5/SIB5bis and SIB7. Usually, RSSI over -90dBm is problematic. Therefore, high RSSI can be considered when having a RSSI between -95 dBm and -70 dBm.

- Good coverage indicator with low data throughput.

- Detection of periodical change of access class barring; normally this indicates that rotating Access Class Barring countermeasures are being used by the telecommunication network (TN).

- Detection of high number of WLANs or 802.11 standard access points, preferably Wi-Fi, forming different groups of user device for radio-connection sharing.

- Detection of high number of WPAN or 802.15 standard access points, preferably Bluetooth, forming different groups of user device for radio-connection sharing.

- Number of changes of cell-ID in the idle-paging channel (PCH). Typically the massive concentrations of users are static during events like during concerts, football events, political concentrations, etc...

- A bad carrier to noise ratio value (EcNo) with a good received signal code power (RSCP). This means there is high interference in a good coverage environment, which should mean congestion in the telecommunication network (TN). EcNo is usually lower than -12dBs for a predetermined time with a RSCP greater than -80 dBm which means good conditions. In this case, if high latency is detected and low throughput and still the RSCP is over a predetermined threshold, then it is considered to be a congestion situation.

- Low value of service grant (SG) allocated in Uplink (UL) to a user device (UD) but the user device (UD) requests data. This means that the user device (UD) has data to transmit but the telecommunication network (TN) is not providing resources, therefore this low throughput means severe congestion situation.

- Very low Uplink Power Headroom (UPH) with a good RSCP plus unhappy bit. This means the user device (UD) has data to transmit, and when the user device (UD) has a good coverage environment it needs higher power to transmit the data, this could mean congestion in the telecommunication network (TN). A UPH lower than 14dBs is typically considered low (given a user device transmission power at 10dBm).

- The Dedicated Physical Control Channel (DPCCH) consumes a lot due of the Uplink (UL) congestion plus unhappy bit. This means the user device (UD) has data to transmit but the power consumption in UL is consumed by the Control part (DPCCH), this could means congestion in the telecommunication network (TN). This is typically measured in a percentage (%) of the UL resources, e.g. a range of 30-70%. If the DPCCH is greater than 30-70% of the UL throughput then congestion is determined.

- Given a good Reference Signal Received Power (RSRP) value, having no answer to first message, preferably through a 3G or a 4G telecommunication standard. In this case having RSRP between -95 and -70 dBm can be considered a good RSRP value. If in this case no answer to first message is detected, then congestion or overload is detected.

- A high period of time of deactivation detection, preferably 2 ms deactivation detection. The user device (UD) and telecommunication network (TN) support features like 2 ms time to interval (TTI) and/or DC but is being configured 10 ms TTI and/or SC to mitigate capacity issues.

- A bad medium Channel Quality Indicator (CQI) value with a good Reference Signal Received Power (RSRP) in the downlink (DL). A typical value for CQI which can be considered bad is a range of [0-15]. A value of CQI in a range of [16-25] can be considered a medium value, and a value of CQI greater than 25 can be considered a good value. This means there is high interference in a good coverage environment, which should mean high congestion in the telecommunication network (TN). Preferably, the QCI measurements can be done more accurately with the Subband CQIs, which measures the quality (CQI) only in parts of the band. If the quality is low in all subbands is a clear indication of high congestion in the telecommunications network (TN).

- Detecting of a pre-scheduling of uplink (UL) resources in the telecommunication network (TN) by the user device (UD). Pre-scheduling of UL resources is done in most infrastructures allowing providing UL resources to the user device without having to perform a scheduling request, this is used until the cell becomes congested, therefore when the pre-scheduling is then stopped, could be congestion in the telecommunication network (TN).

- A low success ratio of the scheduling request of the Physical Uplink Control Channel (PUCCH). This value can be a percentage of success of scheduling requests. For example, a success ratio of less than 60% is an indication of overload or congestion. A range for detection can be [40-80%]. This is an indication that the user device (UD) is requesting to transmit and the telecommunication network (TN) is not allocating any resources.

Advantageously the events and parameters detected or measured by the user device (UD) which have been described, are accessible to the user device (UD) by listening to channels which are available to the device either in the uplink (UL) or in the downlink (DL), and therefore the user device can autonomously/directly detect congestion and/or measure these parameters.

Subsequently the comparison (43) of the at least one measured parameter described above against one or more respective thresholds, which can be some of the given examples or different ones, and the application of respective criteria for the determination of congestion is performed. If the measurements exceed or are lower than certain thresholds then congestion is determined or detected. Otherwise, the checking starts again at measuring (41).

In a preferred embodiment, the determination of the telecommunication network (TN) congestion or overload by the user device comprises comparing:

- the uplink (UL) interference.
- a waiting time for sending a volume of data on UL.
- the unhappy bit Ratio on High-Speed Uplink Packet Access (HSUPA).

against their respective thresholds, and/or,

- comparing the throughput in downlink (DL) against a threshold. If the throughput is lower than a threshold then congestion is determined.

In an embodiment, an application runs in a user device (UD) and controls all the transmission and reception system protocols and parameters in the user device (UD), and can determine whether the criteria are fulfilled to determine if there is a congestion situation in the telecommunication network (TN).

*Measurements (52) and determination (53) performed at the telecommunication network (TN) end.*

In another embodiment of the invention measuring (52) the parameters is performed by the telecommunication network (TN) and selected from at least one of the following parameters:

- date and hour in a calendar preferably a calendar on server (51) or another server in the telecommunication network (TN).
- set of KPI (key parameter indication), preferably RRC (RESOURCE RADIO CONTROL) success rate within a time interval or uplink (UL) load within a time interval.
- telecommunication network (TN) counters, preferably average BH KPI in some days.

In an embodiment, a software program runs in a server (51) located in the telecommunication network (TN) and controls all the transmission and reception system protocols and parameters in the user device (UD), and can determine whether the criteria are fulfilled to determine if there is a congestion situation in the telecommunication network (TN).

Subsequently, in this example the telecommunication network (TN) further compares (54) these parameters, which are accessible at the telecommunications network (TN) side, with determined threshold and checks whether the parameters exceed or are lower than the thresholds for detection of congestion; for example a time interval -i.e date and hour being: 02/06/2014 and time frame being between 2pm and 8pm- is taken as a threshold, and the current date and hour is comprised within the thresholds limits -i.e. current timing is 02/06/2014; 5pm- then congestion situation is detected. This is advantageous in planned events like concerts or football matches in a stadium.

Finally, if detection of congestion happens, the telecommunications network (TN) sends a message updating the telecommunication network (TN) situation to at least one user device (UD), preferably through a 3G or 4G telecommunication standard.

A distinction made as for the entity which determines the thresholds:

*Thresholds established by the User Device (UD)*

In an embodiment of the invention, the thresholds applied by the user device (UD) or applied by the telecommunication network (TN) are set or predetermined in the user device (UD).

*Thresholds established by the telecommunications network (TN)*

In another embodiment of the invention, all the thresholds applied by the user device (UD) or applied by the telecommunication network (TN) are set by a telecommunication network (TN) server (11, 51).

*After Detection of Congestion*

In an embodiment, once the congestion is detected, the user device (UD) can auto adjust transmission parameters in order to avoid further uplink (UL) congestion.

It is necessary that the user device puts itself in a cooperative mode for congestion reduction, for example the user device (UD) can queue the data (D) at a later stage or send them only every interval of time to reduce the number of channel/state establishment/release. The challenge here is to find a suitable solution to manage at the user device (UD) level the overload in the cell. This is called the congestion management process.

*EXEMPLARY CONGESTION MANAGEMENT PROCESS*

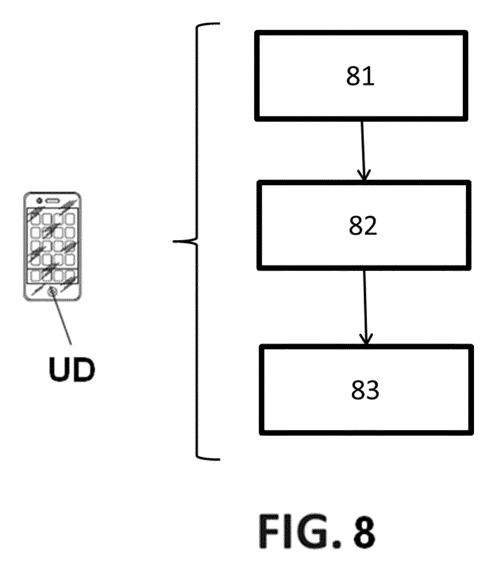

A method of managing traffic load in a congestion situation in the telecommunication network (TN) is described. The method comprises, as it is seen in figure 8:

-   Identifying (81), by the user device (UD), a congestion condition in at least one cell on the telecommunication network (TN);
-   Determining (82), by the user device (UD), at least one appropriate action to be taken by the user device (UD) in order to minimise said congestion condition in the at least one cell; and
-   Performing (83), by the user device (UD), the determined at least one appropriate action.

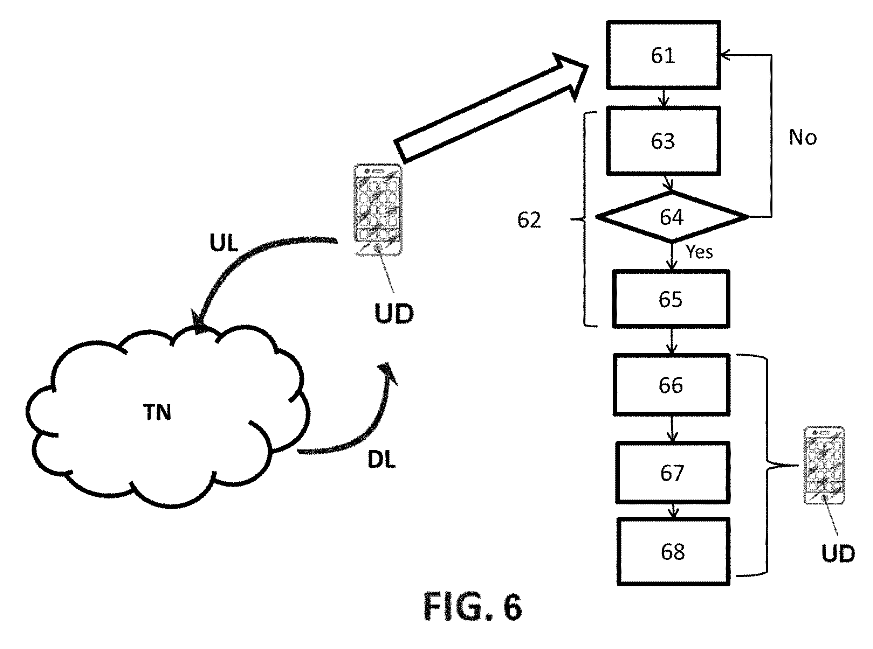

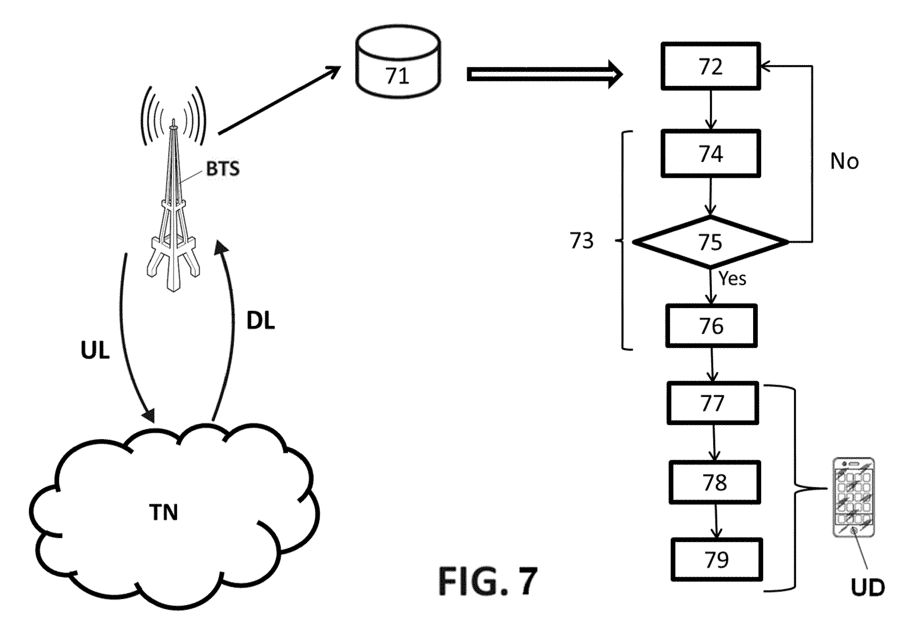

This process is linked with the detection process as will be explained in further detail with special reference to figures 6 and 7.

*Detection by User Device (UD) and management by the User Device (UD)*

In figure 6, a situation is shown wherein detection of congestion (61, 62, 63, 64, and 65) is performed by the user device (UD) and management of congestion (66, 67, and 68) is performed subsequently by the user device (UD). The method is the following:

In the first place, the user device (UD) measures (61) at least one selected parameter.

Further, a congestion situation is determined (62) by:

-   comparing (63) the at least one parameter measured with a threshold, - for example the threshold may be 120 Kbps;
-   determining (64) whether a criterion is fulfilled, and therefore determining whether there is congestion by checking whether a criterion is fulfilled. In the present example, the criterion is: if the measured UL throughput is lower than the threshold, then there is congestion. If the measured UL throughput is 500 Mbps and the threshold is 120Kbps, there is no congestion in the telecommunication network (TN),

-   ending (65) or acknowledging (see below, 66) the determination and thus detecting or not detecting congestion.

If no congestion is determined and/or identified, the next step is repeating the first step (61).

If detection of congestion has happened, then

-   the user device (UD) actively acknowledges (66) autonomously a congestion condition in the cell it is located in the telecommunication network (TN);
-   the user device (UD) determines (67) at least one appropriate action to be taken by the user device (UD) in order to minimise said congestion condition in the at least one cell; and
-   the user device (UD) performs (68) the determined at least one appropriate action.

*Detection by the telecommunications network (TN) and management by the User Device (UD)*

In figure 7, a situation is shown wherein detection of congestion (72, 73, 74, 75 and 76) is performed by the telecommunications network (TN) or a server (71) in the telecommunication network (TN) and management of congestion (77, 78 and 79) is performed subsequently by the user device (UD).

First, an uplink (UL) load in the telecommunications network (TN) is measured (72). For example, the UL load may be 500 Mbps.

Second, a congestion situation is determined (73) by

-   comparing (74), by the telecommunication network (TN), the UL load with a threshold loaded in the server (71) - for example the threshold may be 120 Kbps;
-   determining (75) if there is congestion or not by checking whether a criterion is fulfilled. In the present example, the criterion is: if the measured UL throughput is lower than the threshold, then there is no congestion. If the measured UL throughput is 500 Mbps and the threshold is 120Kbps, there is congestion in the telecommunication network (TN). In this case, the server (71) ends (76) the detection, in a particular example by sending (76) a message updating about a telecommunication network (TN) condition to at least one user device (UD).

Subsequently, if congestion has been detected, then

-   the user device (UD) actively identifies or acknowledges (77) a congestion condition in the cell it is located because the telecommunications network (TN) sends a communication signal to the user device (UD) for it to acknowledge a situation for which a set of actions need to be performed;

- the user device (UD) determines (78) at least one appropriate action to be taken by the user device (UD) in order to minimise said congestion condition in the at least one cell; and
- the user device (UD) performs (79) the determined at least one appropriate action.

In an example, the at least one appropriate action of the method comprises scheduling of transmission of data (D) to be sent by the user device (UD) to the telecommunication network (TN) according to a scheduling rule, the rule configured to minimise said congestion condition.

*Determining a transmission time for a first user device based on a hierarchical assignment of transmission times based on different levels of time scheduling*

In an example the scheduling of transmission is made by a first user device (UD) to a telecommunications network (TN).

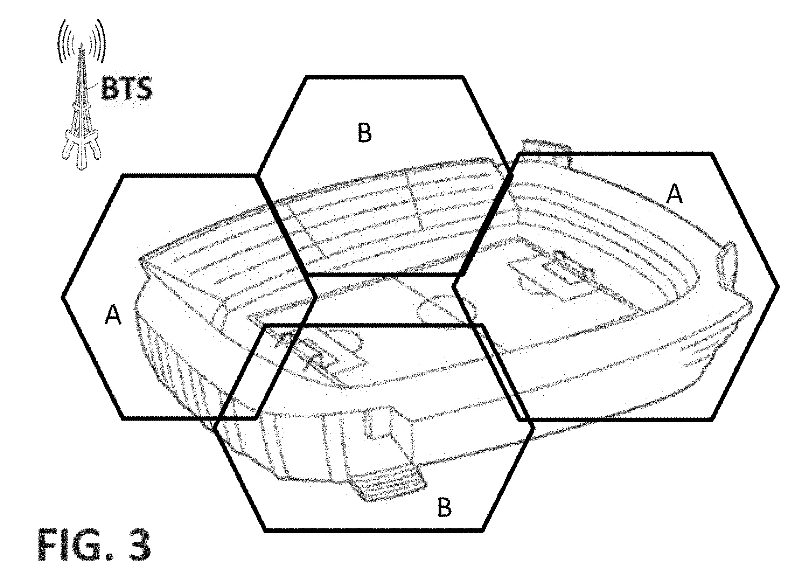

The first user device (UD) is from a plurality of user devices (UDs). In general, each of the plurality of user devices (UDs) is associated with at least one group of the set of groups. Each group of the set of groups may be associated with a characteristic of the telecommunication network (TN) (e.g., each group may correspond to a different cell or to a different cluster of cells, A or B, as shown in figure 3) or with a characteristic of the user device (UD) (e.g., a group may correspond to a specific type of user device (UD) - e.g., devices having the same model - or to any other characteristic shared among devices - e.g., 4G devices, tablets, data-only device, Near field communication (NFC)-enabled devices, etc.).

The method comprises determining a transmission time for the first user device (UD) based on a hierarchical assignment of transmission times based on different levels of time scheduling. Each level of time scheduling may be based on the group the first user device (UD) is associated with and/or a priority assigned within the group.

In the example shown in figure 3, there is described a level of time scheduling focused in the groups which are shown, A, B, A, B, for example in sport events wherein a stadium is divided in four cells. In this example, the various user devices (UD) are split into 2 groups, considering cells in the stadium providing coverage with a circular shape. If 4 cells are considered to cover the whole stadium it would be Cell A, B, A, B.

The hierarchical assignment may comprise a first level of time scheduling comprising: assigning a transmission time to the first device (UD), said transmission time being substantially the same to that assigned to other user devices (UDs) within the same group -for example group A in figure 3-. Said transmission time may be different to the transmission time assigned to user devices (UDs) associated with group B in figure 3.

The transmission time is based on a condition as follows:

$$T_{transmission}(m) = T_{initial} + T \cdot m,$$

wherein

- $T_{transmision}(m)$ is the time for transmission, with m being a number, greater or equal to zero, associated with the number of user devices (UDs); for example, m may be in the range from 2 to 200 user devices (UDs).
- $T_{initial}$ is a starting transmission time, and
- T a period of transmission.
- $T_{initial}$ may be obtained from the expression $N \cdot t0$ wherein N and t0 are cell level parameters broadcasted to the user device (UD) from the telecommunications network (TN). In this way, the initial time for transmission is controlled by the telecommunication network (TN) in such a way that it can be controlled that adjacent cells do not transmit at the same time, providing cell interleaving,
- t0 is 1,
- duration is 5ms,
- m is 2, then

the users of the cells A receive the N3=0 and transmit every

$$T_{transmision} = T3(m) = N3 \cdot t0 + m \cdot T = 0 \cdot 1 + 2 \cdot t =$$

- 0 to 5 ms,
- 10 to 15ms
- 20 to 25 ms,
- ..., and

the users of the cells B receive the N4=5 and transmit every

$$T_{transmision} = T4(m) = N4 \cdot t0 + m \cdot T = 5 \cdot 1 + 2 \cdot t =,$$

- 5 to 10ms,
- 15 to 20ms
- 25 to 30 ms...

resulting in a reduction of the load traffic in the uplink (UL) and the congestion in the telecommunication network (TN).

As it can be seen, the main concept this invention involves is to change the behaviour of a user device (UD), with respect to the state of the art, by scheduling, in this particular embodiment, a periodic transmission for data (D) packets from a user device (UD) so that the congestion is minimised.

The hierarchical assignment may comprise a second level of time scheduling comprising: assigning a transmission time to the first user device (UD), said transmission time being dependent on a priority associated with the application associated with the transmission of the data and/or a characteristic of the data to be sent.

For example different priorities regarding different type of applications are:

- semi-real time applications "m" can be assigned a number, for example 2, and
- best effort applications can be assigned a greater number, for example 8,

which means that best effort applications will have greater periodicity than semi-real time applications during a predetermined duration, for example 1 ms.

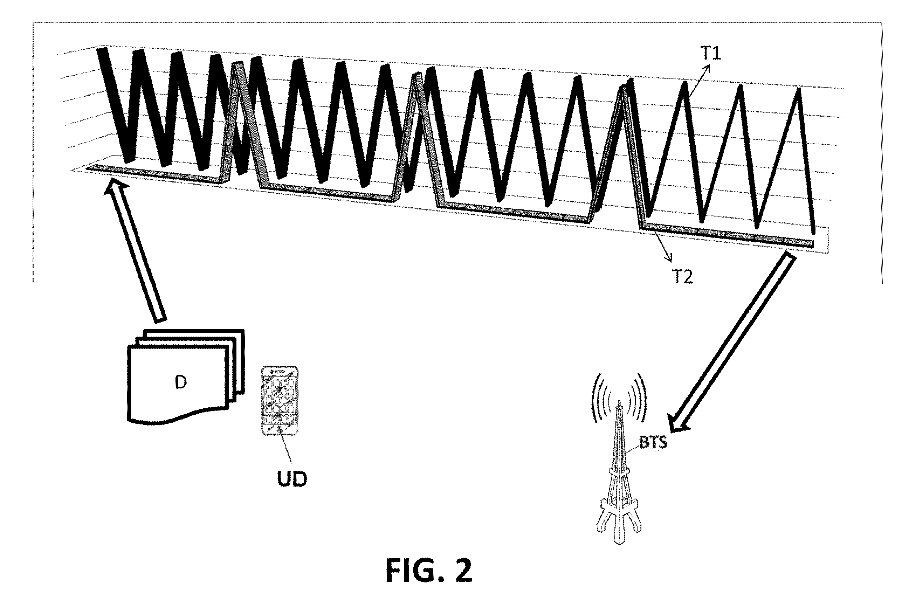

This is represented in figure 2 wherein for example, the scheduling of transmission of data (D) is based on distinguishing between:

- -Semi real time application or time-semi-sensitive applications, wherein the time for transmission can be set up to $T_{transmission}= T1(m)= Tinitial+2·T$, which means that transmission is scheduled during one millisecond every two milliseconds;
- -Best Effort applications or non-time-sensitive applications, wherein the time for transmission can be set up to $T_{transmission}= T2(m)= Tinitial+8·T$, which means that transmission is scheduled during one millisecond every two milliseconds; so that the representation on a time line can be the one in figure 3, wherein:

  - $T_{initial}=0$,
  - $T=1ms$,
  - the period for semi-real applications is T1=2ms and
  - the period for best effort applications is T2=8ms.

As it can be seen in figure 2, advantageously data (D) in real time applications are transmitted more frequently (T1) than data (D) in best effort applications (T2), as required by this type of applications.

Each level of time scheduling may have a different priority. For example, the first level may take precedence over the second level, and vice versa. Each level of time scheduling may be performed at a respective time. For example, the first level of time scheduling may be performed prior to the second level of time scheduling, and vice versa. The hierarchical assignment may comprise further levels of time scheduling comprising: assigning a transmission time to the first user device (UD), said transmission time being dependent on additional and/or combined characteristics of the user devices (UDs).

The assignment of transmission time may comprise assigning an initial time of transmission and/or a period time of transmission dependent upon the two levels of time scheduling. For example, in the first level the first user device (UD) may be assigned initial time t1 based on being associated with group 1 (first level - e.g., the first user device (UD) is in cell with cell ID#A -associated with second level-), and period time $T_A$ based on sending the data using application A (second level - e.g., the application associated with the data to be sent from the first user device (UD) required a period of transmission $T_A$ in order to satisfy specific requirements).

In a particular example, the following is provided:

- all applications running on the user device (UD) are the same type of applications, semi-real time applications,
- from a specific moment user devices (UD) are not allowed any longer to do uplink (UL) transmission without coordinating with all other user device (UD) in the same cell, for example cell ID#A,
- user devices (UD) in the cell A are distributed into groups,
- each group has a well specified uplink scheduling opportunity, with a period of transmission being 1 second,
- user device (UD) split in 10 groups, each group can transmit once every 10 seconds:

  - user device (UD) of group 1 can transmit all the data (D) they have in their own queues from second 1 to second 2, at second 2 they stop uplink (UL) transmission,
  - user device (UD) of group 2 can transmit from second 2 to second 3, then stop,
  - ..., etc.,
  - user device (UD) of group 10 can transmit from second 10 to 11,
  - user device (UD) of group 1 can transmit again from second 11 to second 12...

In a further embodiment $T_{initial}$ is a telecommunication network (TN) provided timing broadcasted to every user device (UD) in the same cell by the telecommunications network (TN) and preferably by a NITZ (Network Identity and Time Zone) server, so that the initial time for transmission can depend on a scheduled event in a stadium, like a sport event or a concert.

In another embodiment $T_{initial}$ is obtained from the expression N·t0 and the scheduling rule is based on the International Mobile Station Equipment Identity (IMEI) number of the user device (UD), so that:

- N is for example the parity of the last number of the IMEI, which is accessible from the user device (UD) and

- t0 is broadcasted from the telecommunications network (TN).

In this way, the initial time for transmission is randomized in such a way that it is not controlled at all. The period is chosen in a random manner for example all user devices (UD) with an even IMEI transmit from time Ta to Tb, all user devices (UDs) with an odd IMEI transmit from time Tb to Tc or in accordance with cell planning.

In a particular example,

- Applications of user devices (UDs) are classified as high priority, for example instant messaging, or low priority, for example email, creating 2 different queues per user device (UD),
- when the terminal of group 1 can transmit packets, it will transmit once every 10 seconds the packets from high priority apps, and only every 200 seconds (i.e. once every 20 scheduling opportunity) the queued data (D) from low priority apps.

IMEI or IMSI can be used as a method to split into groups the user device (UD), ensuring that at the same time only 1 /10th of the user devices (UDs) have the opportunity to transmit at the same time provided that they have data (D) waiting in their queues.

**Claims**

1. A method for detecting, in a telecommunication network (TN), a congestion condition in at least one cell of the telecommunication network (TN), the method comprising:

- measuring (41, 52, 61, 72) at least one parameter related to a radiocommunication between a user device (UD) and the telecommunication network (TN); and
- determining (42, 53, 62, 73), based on the at least one measured parameter, whether the network is congested or overloaded.

2. A method according to claim 1, wherein determining (42, 53, 62, 73) whether the telecommunication network (TN) is congested or overloaded comprises applying determined criteria on the at least one measured parameter.

3. A method according to claim 1 or 2, wherein the determination (42, 53, 62, 73) is performed by the user device (UD).

4. A method according to any one of the above claims, wherein the measuring (41, 52, 61, 72) is performed by the user device (UD).

5. A method according to any of the above claims, wherein the at least one measured parameter is selected from at least one of the following groups:

a) distinguishing between layers, preferably

- the application layer, and
- the 3G or Long Term Evolution (LTE) protocols,

b) throughput in downlink and uplink, preferably

- waiting time, or
- throughput in downlink (DL) and in uplink (UL), or
- Serving Grant in the uplink (UL), or
- coverage indicator in the user device (UD),

c) detecting a high number of people in a surrounding area, preferably

- checking the number of Bluetooth connexions in a surrounding area,
- checking the audio pattern in a surrounding area,
- checking with the rear camera the number of people in a surrounding area,

d) parameters in the radio interface, preferably

- noise to signal ratio (EcNo),
- power headroom UPH,
- DPSCH and unhappy bit,
- Uplink (UL) frequency noise within the user device,
- channel quality indicator (CQI),
- PUCCH channel,

e) special features activated, preferably

- activation of access class barring,
- 2 ms of deactivation detection.

6. A method according to claim 2, wherein applying determined criteria comprises comparing (43, 54, 63, 74) the at least one measured parameter against a respective threshold.

7. A method according to any one of the above claims, wherein the at least one parameter comprises one of:

- an uplink (UL) interference; or
- a waiting time for sending a volume of data on UL; or
- an unhappy bit Ratio on High-Speed Uplink Packet Access (HSUPA); and/or
- a throughput in downlink DL.

**8.** A method according to any of claims 1 or 2, wherein the measuring (41, 52, 61, 72) is performed by the telecommunication network (TN).

**9.** A method of claim 8, wherein the at least one parameter is selected from at least one of the following groups:

- parameters related to a particular date or hour in a calendar,
- parameters related to a particular set of KPI (key parameter indication), preferably RRC (RESOURCE RADIO CONTROL) success rate within a time interval or uplink (UL) load within a time interval, or more preferably telecommunication network (TN) counters such as the average BH (busy hour) KPI.

**10.** A method according to claim 8 or 9, further comprising sending (56, 76), by the telecommunication network (TN), a message updating about a telecommunication network (TN) condition to at least one user device (UD), preferably through a 3G or 4G telecommunication standard.

**11.** A method according to claim 1 further comprising:

- Identifying (66, 77, 81), by the user device (UD), a congestion condition in at least one cell on the telecommunication network (TN);
- determining (67, 78, 82), by the user device (UD), at least one appropriate action to be taken by the user device (UD) in order to minimize said congestion condition in the at least one cell; and
- performing (68, 79, 83), by the user device (UD), the determined at least one appropriate action.

**12.** An application for detecting, in a telecommunication network (TN), a congestion condition in at least one cell of the telecommunication network (TN), the application comprising:

- means for measuring (41, 52, 61, 72) at least one parameter related to a radiocommunication between a user device (UD) and the telecommunication network (TN); and
- means for determining (42, 53, 62, 73), based on the at least one measured parameter, whether the telecommunication network (TN) is congested or overloaded.

**13.** An application according to claim 12, further comprising means for performing at the user device (UD) the relevant steps of any one of the methods of claims 2 to 11.

**14.** A user device (UD) adapted to perform the relevant steps of any one of the methods of claims 1 to 11.

**15.** A server adapted to perform the relevant steps of any one of the methods of claims 1 to 11.

FIG. 1

EP 2 897 400 A1

FIG. 2

19

FIG. 3

No

41 → 43 → 44 —Yes→ 45

42

UD

UL

DL

TN

**FIG. 4**

FIG. 5

FIG. 6

FIG. 7

EP 2 897 400 A1

**FIG. 8**

**Europäisches Patentamt**
**European Patent Office**
**Office européen des brevets**

## EUROPEAN SEARCH REPORT

Application Number

EP 14 38 2014

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2003/218974 A1 (ZUNIGA JUAN CARLOS [CA]) 27 November 2003 (2003-11-27) * figures 1-5 * * paragraphs [0018] - [0022], [0030], [0038] * ----- | 1-8,10, 12-15 | INV. H04W24/00 H04W28/02 H04W88/02 |
| X | WO 2009/134454 A1 (MA COM INC [US]; MONNES PETER [US]; HENGEVELD THOMAS ANDREW [US]) 5 November 2009 (2009-11-05) * figure 3 * * table 1 * * paragraph [0018] * * paragraphs [0020] - [0024] * ----- | 1-9, 12-15 | |
| X | EP 2 389 030 A1 (VODAFONE PLC [GB]; VODAFONE ESPANA SAU [ES]) 23 November 2011 (2011-11-23) * paragraph [0008] * * paragraph [0017] - paragraph [0018] * * paragraph [0028] - paragraph [0032] * ----- | 1,2,5-8, 10,12-15 | |
| X,D | US 2010/309788 A1 (HO SAI YIU DUNCAN [US] ET AL) 9 December 2010 (2010-12-09) * paragraphs [0010], [0012], [0144], [0145] * * figures 3-5 * ----- | 1,3-5, 11-14 | TECHNICAL FIELDS SEARCHED (IPC) H04W |
| X,D | US 2013/194919 A1 (GARAVAGLIA ANDREA MARIA [DE] ET AL) 1 August 2013 (2013-08-01) * paragraphs [0028], [0043], [0047], [0054], [0063] * ----- | 1-7 | |

-/--

The present search report has been drawn up for all claims

| Place of search | Date of completion of the search | Examiner |
|---|---|---|
| The Hague | 18 June 2014 | Kesting, Christiane |

EPO FORM 1503 03.82 (P04C01)

**EUROPEAN SEARCH REPORT**

Application Number

EP 14 38 2014

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | OULASVIRTA A ET AL: "ContextPhone: A Prototyping Platform for Context-Aware Mobile Applications", IEEE PERVASIVE COMPUTING, IEEE SERVICE CENTER, LOS ALAMITOS, CA, US, vol. 4, no. 2, 1 April 2005 (2005-04-01), pages 51-59, XP011131392, ISSN: 1536-1268 * pages 51-53 * | 5 | |
| | | | TECHNICAL FIELDS SEARCHED (IPC) |

The present search report has been drawn up for all claims

| Place of search | Date of completion of the search | Examiner |
|---|---|---|
| The Hague | 18 June 2014 | Kesting, Christiane |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 14 38 2014

This annex lists the patent family members relating to the patent documents cited in the above-mentioned European search report.
The members are as contained in the European Patent Office EDP file on
The European Patent Office is in no way liable for these particulars which are merely given for the purpose of information.

18-06-2014

| Patent document cited in search report | | Publication date | Patent family member(s) | | | Publication date |
|---|---|---|---|---|---|---|
| US 2003218974 | A1 | 27-11-2003 | AT | 339864 | T | 15-10-2006 |
| | | | AT | 431021 | T | 15-05-2009 |
| | | | AU | 2003241461 | A1 | 12-12-2003 |
| | | | CA | 2486761 | A1 | 04-12-2003 |
| | | | CN | 1656825 | A | 17-08-2005 |
| | | | DE | 60308363 | T2 | 06-09-2007 |
| | | | EP | 1510082 | A1 | 02-03-2005 |
| | | | EP | 2063564 | A1 | 27-05-2009 |
| | | | ES | 2271589 | T3 | 16-04-2007 |
| | | | JP | 4282596 | B2 | 24-06-2009 |
| | | | JP | 2005527160 | A | 08-09-2005 |
| | | | KR | 20050007420 | A | 17-01-2005 |
| | | | KR | 20050090018 | A | 09-09-2005 |
| | | | TW | I247501 | B | 11-01-2006 |
| | | | TW | I323100 | B | 01-04-2010 |
| | | | US | 2003218974 | A1 | 27-11-2003 |
| | | | US | 2008101323 | A1 | 01-05-2008 |
| | | | US | 2014153395 | A1 | 05-06-2014 |
| | | | WO | 03101126 | A1 | 04-12-2003 |
| WO 2009134454 | A1 | 05-11-2009 | AU | 2009241694 | A1 | 05-11-2009 |
| | | | CA | 2722164 | A1 | 05-11-2009 |
| | | | CN | 102017665 | A | 13-04-2011 |
| | | | EP | 2277334 | A1 | 26-01-2011 |
| | | | JP | 5253566 | B2 | 31-07-2013 |
| | | | JP | 2011521535 | A | 21-07-2011 |
| | | | KR | 20100135971 | A | 27-12-2010 |
| | | | RU | 2010145045 | A | 10-06-2012 |
| | | | US | 2009275343 | A1 | 05-11-2009 |
| | | | WO | 2009134454 | A1 | 05-11-2009 |
| EP 2389030 | A1 | 23-11-2011 | EP | 2389030 | A1 | 23-11-2011 |
| | | | ES | 2375866 | A1 | 07-03-2012 |
| US 2010309788 | A1 | 09-12-2010 | CN | 102461252 | A | 16-05-2012 |
| | | | EP | 2441292 | A1 | 18-04-2012 |
| | | | JP | 2012529860 | A | 22-11-2012 |
| | | | KR | 20120024953 | A | 14-03-2012 |
| | | | TW | 201132147 | A | 16-09-2011 |
| | | | US | 2010309788 | A1 | 09-12-2010 |
| | | | WO | 2010144484 | A1 | 16-12-2010 |
| US 2013194919 | A1 | 01-08-2013 | US | 2013194919 | A1 | 01-08-2013 |
| | | | WO | 2013116746 | A1 | 08-08-2013 |

EPO FORM P0459

For more details about this annex : see Official Journal of the European Patent Office, No. 12/82

**EP 2 897 400 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1510082 B1
- US 20130194919 A1
- US 20100309788 A1